# EUROPÄISCHE PATENTSCHRIFT

(11) **EP 1 055 275 B1**
(45) Veröffentlichungstag und Bekanntmachung des Hinweises auf die Patenterteilung: **06.12.2006**
(21) Anmeldenummer: 99910124.9
(22) Anmeldetag: 11.02.1999
(51) Int. Cl.: H02J 1/10

(54) **VERFAHREN ZUM GESTEUERTEN PARALLELBETRIEB VON GLEICHSPANNNUNGSWANDLERN**
METHOD FOR CONTROLLED PARALLEL OPERATION OF DIRECT CURRENT CONVERTERS
PROCEDE DE COMMANDE DE CONVERTISSEURS DE TENSION CONTINUE FONCTIONNANT EN PARALLELE

(30) Priorität: 13.02.1998 DE 19805926
(43) Veröffentlichungstag der Anmeldung: 29.11.2000
(73) Patentinhaber: ROBERT BOSCH GMBH, 70442 Stuttgart (DE)
(72) Erfinder: DITTMER, Bernd, D-71640 Ludwigsburg (DE); GRONBACH, Roman, D-70437 Stuttgart (DE); RIEGER, Reinhard, D-70372 Stuttgart (DE); SCHÖTTLE, Richard, D-75248 Oelbronn (DE)
(86) Internationale Anmeldenummer: PCT/DE1999/000373
(87) Internationale Veröffentlichungsnummer: WO 1999/041816

(56) Entgegenhaltungen:
- DE-A- 1 954 649
- US-A- 4 924 170
- WU T F ET AL: "RELIABILITY IMPROVEMENT IN PARALLEL CONNECTED CONVERTER SYSTEMS" PROCEEDINGS OF THE INTERNATIONAL CONFERENCE ON INDUSTRIAL ELECTRONI CONTROL AND INSTRUMENTATION (IECON), KOBE, OCT. 28 - NOV. 1, 1991, Bd. 1, Nr. CONF. 17, 28. Oktober 1991, Seiten 429-434, XP000346323 INSTITUTE OF ELECTRICAL AND ELECTRONICS ENGINEERS

## Beschreibung

### Stand der Technik

Zur Leistungserhöhung von DC/DC-Wandlern werden diese im Master-Slave-Betrieb betrieben. Im Master-Slave-Betrieb übernimmt der sog. Master übergeordnet die Aufgaben der Regelung des Gesamtsystems. Der bzw. die untergeordneten Wandler (Slaves) arbeiten im gestellten Betrieb, was eine Vervielfachung des elektrischen Leistungspotentials bedeutet. Die Ansteuerung des Slave-Wandlers kann beispielsweise durch die Weitergabe von Schaltbefehlen für elektrische Ventile (z.B. Ansteuersignal der Schalttransistoren) bewerkstelligt werden.

### Problematik

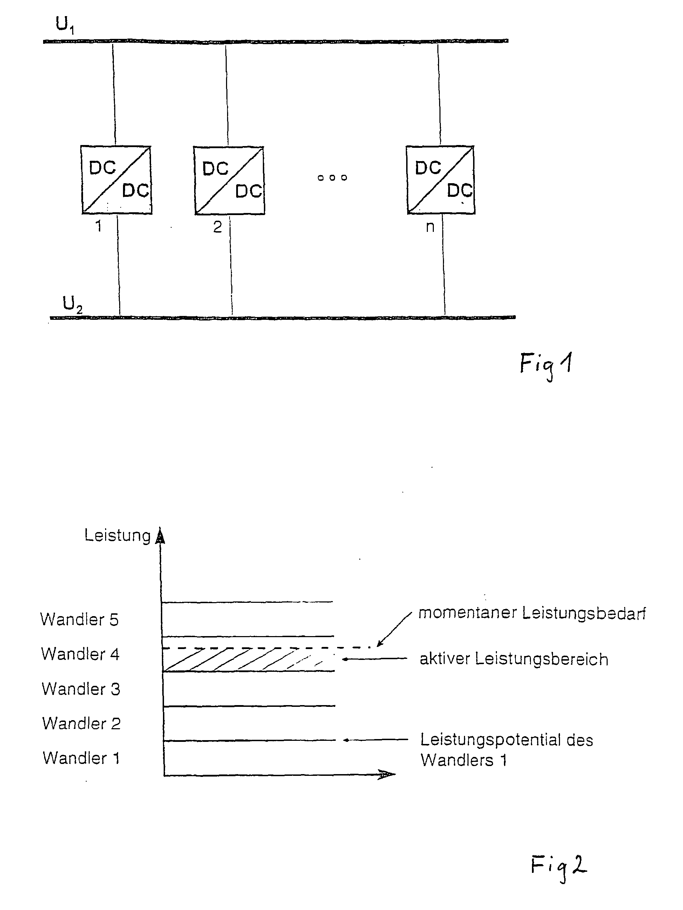

DC/DC-Wandler werden zur Erzeugung eines oder mehrerer Spannungspotentiale oder zur Energieübertragung zwischen zwei unterschiedlichen Spannungspotentialen (z.B. Zweispannungsbordnetz 14V/42V im Kfz) eingesetzt. Zur flexiblen Reaktion auf die gewünschte maximale Ausgangsleitung bietet sich die ausgangsseitige Parallelschaltung von n Einzelwandlermodulen an. Eine solche Anordnung ist in Fig 1 dargestellt.

Die Eingangsspannungsseite ist dabei beispielsweise mit dem Generator des Fahrzeuges verbunden. Verfügt jeder Wandler über eine selbständige Spannungsreglung, so kann es durch die ausgangsseitige Verbindung zu Koppelschwingungen kommen.

Aus der US-A 4,924,170 ist ein Spannungsversorgungssystem bekannt, bei dem eine Vielzahl von Modulen zur Spannungsversorgung parallel zueinander liegen. Diese Spannungsversorgungsmodule werden alle in derselben Weise angesteuert und es ist nicht vorgesehen, eines dieser Module als Regler auszugestalten oder als Regler arbeiten zu lassen und die übrigen Module nur im Leerlauf oder im Volllastbetrieb zu betreiben. Aus der US-A 4,924,170 ist auch noch bekannt, dass beim Einsatz mehrerer Spannungsversorgungsmodule wenigstens eines dieser Module mit einer Strombegrenzung betreibbar sein soll und dass wenn das erste Modul seine Leistungsgrenze erreicht, dies dem zweiten Modul mitteilt, und das zweite Modul dann die Regelung übernimmt.

Aus der DE-A 195 46 495 ist bekannt, bei parallel betriebenen Gleichspannungswandlern Leistungsdaten über ein Bus-System an eine Steuereinheit zu übertragen. Weiterhin ist bekannt, beim Parallelbetrieb der Gleichspannungswandler für eine gleichmäßige Aufteilung der elektrischen Leistung zu sorgen. Dabei arbeitet einer der Gleichspannungswandler als Master und die übrigen als Slave. Die Master-Einheit gibt einen Spannungsvorgabewert vor, der über das Bus-System an alle anderen parallel betriebenen Slave-Einheiten übermittelt wird, sodass diese den betreffenden Wert als Spannungsvorgabewert verwenden.

### Aufgabe der Erfindung

Die Aufgabe der Erfindung besteht in einer Leistungssteigerung von Gleichspannungswandlern (DC/DC-Wandlern) durch kontrollierten Parallelbetrieb mehrerer Einzelwandler bei gleichzeitigem Verhindern von Köppelschwingungen. Gelöst wird diese Aufgabe durch die im Hauptanspruch sowie in den Unteransprüchen aufgezeigten Vorrichtungen und Verfahren zum gesteuerten Parallelbetrieb von Gleichspannungswandlern.

### Vorteile der Erfindung

Das aufgezeigte und im Anspruch 1 beanspruchte Prinzip der Lastaufteilung vermeidet in vorteilhafter Weise die Gefahr von Koppelschwingungen bei parallel arbeitenden Spannungsregelungen. Die Anordnung der Wandler kann sowohl räumlich nahe als auch getrennt erfolgen. Im Gegensatz zu den bekannten Verfahren muß ein Informationsaustausch zwischen den Wandlern nur im Umschaltzeitpunkt erfolgen. Hierfür reicht eine Verbindung niedriger Bandbreite (z.B. CAN) aus. Die serielle Kontrollstruktur hat den Vorteil, daß sie einen identischen Aufbau der Wandler ermöglicht.

Weitere Vorteile der Erfindung werden durch die in den Unteransprüchen angegebenen Maßnahmen erzielt.

### Zeichnung

Ausführungsbeispiele der Erfindung sind in der Zeichnung dargestellt und werden in der nachfolgenden Beschreibung näher erläutert. Im Einzelenen zeigt Figur 1 die modulare Parallelschaltung mehrerer Wandler, in Figur 2 ist beispielhaft die Verteilung eines momentanen Leistungsbedarfs dargestellt, Figur 3 zeigt eine hierarchische Kontrollstruktur und Figur 4 eine Anordnung mit serieller Kontrollstruktur.

### Beschreibung

Figur 1 zeigt, wie eine modulare Parallelschaltung mehrerer DC/DC-Wandler 1, 2,..., n, die zur flexiblen Reaktion auf eine gewünschte maximale Ausgangsleistung geeignet ist und für die die Erfindung einsetzbar ist. Die Eingangsspannung, beispielsweise die Bordnetzspannung eines Fahrzeugs ist mit U1 bezeichnet, die Ausgangsspannung der DC/DC-Wandler ist U2. In einem Zweispannungsbordnetz betragen die zugehörigen Spannungen beispielsweise 14 und 42 Volt.

Verfügt jeder der DC/DC-Wandler 1, 2, ..., n über eine selbständige Spannungsregelung, kann es durch die ausgangsseitige Verbindung zu Koppelschwingungen kommen. Zur Vermeidung der gegenseitigen Reglerbeeinflussung empfiehlt sich eine Reduzierung auf einen einzigen aktiven Spannungsregler. Der erforderliche Leistungsbedarf wird aufgeteilt auf (n-1) Wandler, die entweder im Vollast- oder Leerlaufbetrieb arbeiten und einen weiteren Wandler, der die Spannungsregelung im Teillastbetrieb übernimmt.

In Figur 2 wird beispielhaft die Lastverteilung bei fünf parallelen Wandlern dargestellt. Die Wandler 1, 2 und 3 arbeiten im Vollastbetrieb und stellen ausgangsseitig ihren maximalen Ausgangsstrom zur Verfügung. Der Wandler 4 übernimmmt die Spannungsregelung und deckt den "aktiven" Leistungsbereich ab. Der Wandler 5 arbeitet im Leerlauf.

Die Regelstrategie läßt sich wie folgt darstellen:
- Reicht zur Deckung des Leistungsbedarfes ein einziger Wandler aus, so übernimmt dieser die Regelung der Ausgangsspannung. Die anderen Wandler sind nicht in Betrieb.
- Übersteigt die Leistungsanforderung die Leistungsfähigkeit eines einzelnen Wandlers (Wandler 1), übergibt dieser Wandler die Spannungsregelung an den nächsten Wandler (Wandler 2). Wandler 1 geht in den Vollastbetrieb über und stellt seinen maximalen Ausgangsstrom zur Verfügung.
- Bei weiterem Ansteigen des Leistungsbedarfes werden sukzessive mehrere Wandler in den. Vollastbetrieb gefahren. Jeweils ein weiterer Wandler übernimmt die noch verbleibende Teillast.
- Im umgekehrten Fall sinkenden Leistungsbedarfes werden sukzessive die Wandler vom Vollast- in den Teillastbetrieb zurückgeschaltet.

Zur Realisierung lassen sich die folgenden Kontrollstrukturen anwenden:

### Hierarchische Kontrollstruktur

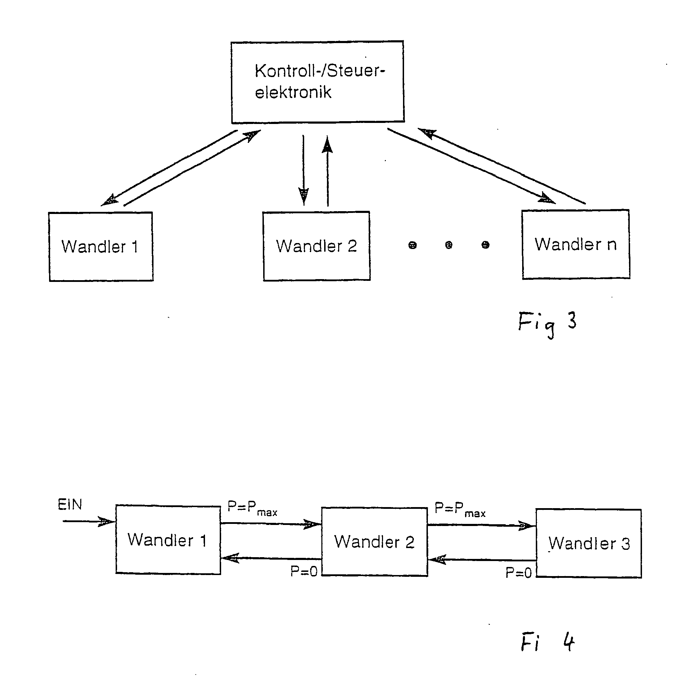

Bei Anwendung einer hierarchischen Kontrollstruktur übernimmt eine zentrale Kontroll-/Steuerelektronik die Koordination der einzelnen Wandler. Sie erhält vom jeweils aktiven spannungsregelnden Wandler Informationen über dessen momentane Ausgangsleistung und steuert die übrigen Wandler in den Vollast- oder Leerlaufbetrieb. Eine solche hierarchische Kontrollstruktur ist in Figur 3 dargestellt. Die zugehörige Kontroll-/Steuerelektronik 6 kann beispielsweise auch in einen Wandler integriert sein, beispielsweise in den Wandler 1. Der Austausch der Daten kann über einen seriellen Bus (z.B. CAN) oder über gesonderte Signalleitungen bidirektional erfolgen.

Manche DC/DC-Wandler können nicht im Leerlauf betrieben werden. Sie erfordern eine ausgangsseitige Grundlast. In diesem Fall müssen die Umschaltschwellen für die Weitergabe der Spannungsregelung von einem zum nächsten Wandler angepaßt werden. Die Zuschaltschwelle bei steigendem Bedarf liegt dann nicht bei P = Pₘₐₓ, sondern bei P = Pₘₐₓ - P_{grund}. Die Abschaltschwelle bei sinkendem Bedarf ist in diesem Fall mit der Grundlast P_{grund} identisch.

Liegt das Wirkungsgradmaximum der eingesetzten Wandler im Teillastbereich, so können die gesteuerten Wandler zur Wirkungsgradoptimierung auch in diesem Teillastbereich betrieben werden. Das Steuersignal hierzu wird von der zentralen Kontrollelektronik vorgegeben. Reicht die Gesamtleistungsabgabe nicht aus, so kann die Abgabe der gesteuerten Wandler nachträglich bis zur maximalen Leistung erhöht werden.

### Serielle Struktur (Kontrollstruktur)

Bei Anwendung einer seriellen Struktur wie sie in Figur 4 dargestellt ist, kann auf die zentrale Steuerelektronik nach Figur 3 verzichtet werden. Jeder Wandler kann identisch ausgeführt sein. Die Verknüpfungen erfolgen nur durch die externe Beschaltung.

Der Start des Systems kann beispielsweise durch einen Einschaltbefehl EIN für der ersten Wandler in der Kette erfolgen. Dieser übernimmt die Spannungsregelung. Erreicht Wandler 1 seine Leistungsgrenze, wird die Übergabe der Spannungsregelung an Wandler 2 durch Signalisierung von P = Pₘₐₓ eingeleitet. Dies ist ein signal für das Erreichen der Maximalleistung. Der Wandler 1 stellt also am Ausgang seine Maximalleistung bzw. seinen Maximalstrom zur Verfügung. Steigende Leistungsanforderung hat eine sukzessive Weitergabe der Spannungsregelung über des Signal P = Pₘₐₓ zur Folge.

Im Fall abnehmender Leistungsanforderung signalisiert der momentan aktiv spannungsregelnde Wandler dem vorhergehenden Wandler das Erreichen seines Leerlaufzustandes durch die Information P = 0. Der vorhergehende Wandler arbeitet nun als Spannungsregler. Die Wandler werden so nach und nach in den Leerlauf geschaltet, beim dargestellten Beispiel von Wandler 3 beginnend bis Wandler 1.

Wie in bereits im Zusammenhang mit der Ausführungsform nach Figur 3 ausgeführt wurde, kann als Schaltschwelle auch die Grundlast oder der Punkt maximalen Wirkungsgrades herangezogen werden.

Der Austausch der Daten kann ebenfalls über einen seriellen Bus (z.B. CAN) oder über gesonderte Signalleitungen erfolgen.

Die aufgezeigten Vorrichtungen bzw. die zugehörigen Verfahren zum gesteuerten Parallelbetrieb von Spannungswandlern (DC/DC-Wandlern) lassen sich z.B. in fahrzeugbordnetzen einsetzen, sie sind aber auch für andere Anwendungen geeignet, bei denen es darauf ankommt, hohe Leistungen zu wandeln. Wesentlich ist, daß einer der Wandler im aktiven Bereich arbeitet und alle anderen entweder im Vollastbetrieb oder im Leerlauf sind.

## Patentansprüche

1. Verfahren zum gesteuerten Parallelbetrieb von Gleichspannungswandlern, insbesondere in einem Mehrspannungsbordnetz eines Fahrzeuges, mit zwei Spannungsbereichen (U1) und (U2), zwischen denen die parallel geschalteten Spannungswandler liegen, wobei lediglich einer der Spannungswandler als aktiver Spannungsregler arbeitet und die Spannungsregelung im Teillastbetrieb übernimmt und die anderen (n-1) Wandler entsprechend dem erforderlichen Leistungsbedarf entweder im Volllast- oder Leerlaufbetrieb arbeiten, wobei bei geringem Leistungsbedarf lediglich einer, insbesondere der erste Wandler in Betrieb ist und die Regelung der Ausgangsspannung übernimmt, während die anderen Wandler nicht in Betrieb sind, **dadurch gekennzeichnet, dass** sofern die Leistungsanforderung die Leistungsfähigkeit des als Spannungswandler arbeitenden Wandlers übersteigt, dieser Wandler entweder die Spannungsregelung durch eine Signalisierung des Erreichens seiner Maximalleistung an den nächsten Wandler übergibt oder eine Information über seine momentane Ausgangsleistung an eine zentrale Kontroll-/Steuerelektronik abgibt und diese die Ansteuerung der übrigen Wandler entsprechend in den Volllast oder Leerlaufbetrieb steuert, wobei vorgebbare Wandler wenigstens mit einer ausgangsseitigen Grundlast betrieben werden und die Umschaltschwellen für die Weitergabe der Spannungsregelung an diese Grundlast angepasst wird und die Zuschaltschwelle bei steigendem Bedarf bei P=Pmax-Pgrund liegt, während der Abschaltschwelle bei sinkendem Bedarf der Grundlast entspricht.

2. Verfahren nach Anspruch 1, **dadurch gekennzeichnet, dass** die Lastverteilung bei einer vorgebbaren Anzahlen vom parallelen Wandler so erfolgt, dass die Wandler (1), (2) und (3) im Vollastbetrieb arbeiten und ausgangsseitig ihren maximalen Ausgangsstrom liefern, dass der Wandler (4) eine Spannungsregelung übernimmt und den aktiven bzw. variablen Leistungsbereich abdeckt und der Wandler (5) im Leerlaufbetrieb ist.

3. Verfahren nach Anspruch 1 oder 2, **dadurch gekennzeichnet, dass** sofern die Leistungsanforderung die Leistungsfähigkeit eines einzelnen Wandlers übersteigt, dieser in den Vollastbetrieb übergeht und seinen maximalen Ausgangsstrom liefert.

4. Verfahren nach Anspruch 1, 2 oder 3, **dadurch gekennzeichnet, dass** bei weitersteigendem Bedarf weitere Wandler in den Vollastbetrieb gefahren werden und jeweils der folgende Wandler die Teillast übernimmt und dass bei sinkendem Leistungsbedarf die Wandler sukzessive vom Vollast- in den Teillastbetrieb zurückgeschaltet haben.

5. Verfahren nach einem der vorhergehenden Ansprüche, **dadurch gekennzeichnet, dass** die Kontrollstruktur eine hierarchischen Kontrollstruktur ist, die von der Kontroll-/Steuerelektronik durchgeführt wird, die alle Wandler ansteuert und von diesen Daten empfangen kann, wobei der Austausch der Daten über einen seriellen Bus, insbesondere einen CAN-Bus erfolgt oder über gesonderte Signalleitungen.

6. Verfahren nach Anspruch 5, **dadurch gekennzeichnet, dass** die Kontroll-/Steuerelektronik in einem der Wandler integriert ist.

7. Verfahren nach einem der vorhergehenden Ansprüche, **dadurch gekennzeichnet, dass** vorgebbare Wandler so im Teillastbereich betrieben werden, dass ein Wirkungsgradmaximum entsteht, wobei mittels Steuersignalen von der zentralen Kontroll- und Steuerelektronik gegebenenfalls die Leistung bis zur maximalen Leistung erhöhen.

8. Verfahren nach einem der vorhergehenden Ansprüche, **dadurch gekennzeichnet, dass** die Wandler in einer seriellen Anordnung betrieben werden und untereinander verknüpft sind, wobei jeder Wandler den ihm folgenden Wandler ein Signal für das Erreichen seiner Maximalleistung zuführt und von diesem ein Signal für das Erreichen des Leerlaufs erhält.

9. Verfahren nach Anspruch 7, **dadurch gekennzeichnet, dass** die Spannungsregelung nur in einem der Wandler erfolgt und bei Erreichen seiner Vollast sukzessive an den nachfolgenden Wandler weitergegeben wird.

10. Verfahren nach einem der vorhergehenden Ansprüche, **dadurch gekennzeichnet, dass** als Schaltschwelle für die Weitergabe der Spannungsregelung oder der Abschaltung die Grundlast oder der Punkt des maximalen Wirkungsgrades verwendet wird.

11. Verfahren nach einem der vorhergehenden Ansprüche, **dadurch gekennzeichnet, dass** der Austausch der Daten über einen seriellen Bus, insbesondere CAN-Bus oder über gesonderte Signalleitungen erfolgt.

## Claims

1. Method for the controlled parallel operation of direct voltage transformers, in particular in a multi-voltage on-board power system of a vehicle, having two voltage ranges (U1) and (U2), between which the voltage transformers which are connected in parallel are located, just one of the voltage transformers operating as an acting voltage regulator and regulating the voltage in the partial load operating mode and the other (n-1) transformers operating either in the full load operating mode or in the idling operating mode according to the necessary power demand, in which case when the power demand is low just one, in particular the first transformer, is operational and regulates the output voltage while the other transformers are not operational, **characterized in that** if the power demand exceeds the power of the transformer which is operating as a voltage transformer this transformer transfers the function of regulating the voltage to the next transformer by signalling that its maximum power has been reached, or said transformer outputs information about its instantaneous output power to a central monitoring/control electronic system and the latter correspondingly controls the actuation of the other transformers to the full load operating mode or idling operating mode, with predefinable transformers being operated at least with an output-end basic load and the switch-over thresholds for the transfer of the function of regulating the voltage being adapted to this basic load and the activation threshold when demand increases being P=Pmax-Pbasic, while the switch-off threshold corresponds to the basic load when demand is falling.

2. Method according to Claim 1, **characterized in that** when there are predefinable numbers of parallel transformers the load distribution is carried out in such a way that the transformers (1), (2) and (3) operate in the full load operating mode and supply their maximum output power at the output end, **in that** the transformer (4) performs the function of regulating the voltage and covers the active or variable power range, and the transformer (5) is in the idling operating mode.

3. Method according to Claim 1 or 2, **characterized in that** if the power demand exceeds the power of an individual transformer said transformer goes into the full load operating mode and supplies its maximum output power.

4. Method according to Claim 1, 2 or 3, **characterized in that** when demand continues to rise further transformers are placed in the full load operating mode and in each case the following transformer assumes the partial load, and **in that** when the power demand drops the transformers are successively switched back from the full load operating mode into the partial load operating mode.

5. Method according to one of the preceding claims, **characterized in that** the monitoring structure is a hierarchical monitoring structure which is carried out by the monitoring/control electronic system which actuates all the transformers and can receive data from them, the exchange of data being carried out via a serial bus, in particular a CAN bus or via separate signal lines.

6. Method according to Claim 5, **characterized in that** the monitoring/control electronic system is indicated in one of the transformers.

7. Method according to one of the preceding claims, **characterized in that** predefinable transformers are operated in the partial load range in such a way that a maximum degree of efficiency arises, the power being, if appropriate, increased to the maximum power by means of control signals from the central monitoring and control electronic system.

8. Method according to one of the preceding claims, **characterized in that** the transformers are operated in a serial arrangement and logically linked to one another, each transformer feeding to the transformer following at a signal indicating its maximum power is reached and receiving from said transformer a signal indicating that the idling mode has been reached.

9. Method according to Claim 7, **characterized in that** the voltage is regulated in only one of the transformers and when its full load is reached the function of regulating the voltage is passed on successively to the following transformer.

10. Method according to one of the preceding claims, **characterized in that** the basic load or the point of maximum efficiency is used as the switching threshold for the passing on of the function of regulating the voltage or of switching off.

11. Method according to one of the preceding claims, **characterized in that** the data is exchanged via a serial bus, in particular a CAN bus or via separate signal lines.

## Revendications

1. Procédé de commande de convertisseurs de tension continue fonctionnant en parallèle, notamment pour un réseau embarqué multitension d'un véhicule comprenant deux zones de tension (U1) (U2) entre lesquelles se trouvent des convertisseurs de tension sont branchés en parallèle,
uniquement l'un des convertisseurs de tension fonctionnant comme régulateur de tension, actif, assure la régulation de tension dans le mode de fonctionnement en charge partielle et les (n-1) autres convertisseurs travaillent selon la puissance demandée nécessaire, soit en mode de pleine charge soit à vide,
et pour une faible demande de puissance, uniquement l'un des convertisseurs, notamment le premier convertisseur, fonctionne et assure la régulation de la tension de sortie alors que les autres convertisseurs sont au repos,
**caractérisé en ce que**
dans la mesure où la demande de puissance dépasse la capacité de puissance du convertisseur fonctionnant comme convertisseur de tension, ce convertisseur soit transfert la régulation de tension en signalant qu'il atteint sa puissance maximum vers le convertisseur suivant, soit fournit une information concernant sa puissance de sortie instantanée à une électronique de commande/contrôle, centrale et celle-ci assure la commande des autres convertisseurs selon que l'on est en mode de pleine charge ou de fonctionnement à vide, des convertisseurs prédéfinis fonctionnant au moins avec une charge de base côté sortie et les seuils de commutation pour transférer la régulation de tension sont adaptés à cette charge de base et le seuil de branchement pour une demande croisante se situe à P = Pmax - Pbase, alors que le seuil de coupure correspond à une diminution de la demande de charge de base.

2. Procédé selon la revendication 1,
**caractérisé en ce que**
la distribution de charge se fait pour un nombre prédéfini de convertisseurs en parallèle,
les convertisseurs (1, (2), (3) travaillent en mode de charge maximale et en sortie ils fournissent leur courant de sortie maximum,
le convertisseur (4) assure une régulation de tension et couvre la plage de puissance active ou variable et le convertisseur (5) est en mode de marche à vide.

3. Procédé selon la revendication 1 ou 2,
**caractérisé en ce que**
dans la mesure où la demande de puissance dépasse la puissance que peut fournir un seul convertisseur, celui-ci passe en mode de charge maximale et fournit son courant de sortie maximum.

4. Procédé selon les revendications 1, 2 ou 3,
**caractérisé en ce que**
si la demande continue d'augmenter, d'autres convertisseurs passent en mode de charge maximale et chaque fois le convertisseur suivant reprend la charge partielle et lorsque la demande de puissance diminue, les convertisseurs rétrogradent successivement du mode de fonctionnement en charge maximale vers le mode de fonctionnement en charge partielle.

5. Procédé selon l'une quelconque des revendications précédentes,
**caractérisé en ce que**
la structure de contrôle est une structure de contrôle hiérarchisée exécutée par l'électronique de commande/contrôle qui commande tous les convertisseurs et reçoit leurs données, l'échange des données se faisant par un bus série, notamment un bus CAN ou par d'autres lignes de transmission de signaux.

6. Procédé selon la revendication 5,
**caractérisé en ce que**
l'électronique de commande/contrôle est intégrée dans l'un des convertisseurs.

7. Procédé selon l'une quelconque des revendications précédentes,
**caractérisé en ce que**
des convertisseurs prédéfinis fonctionnent en mode de charge partielle pour obtenir un maximum de rendement, et à l'aide de signaux de commande de l'électronique de commande et de contrôle central, on augmente le cas échéant la puissance jusqu'à la puissance maximale.

8. Procédé selon l'une quelconque des revendications précédentes,
**caractérisé en ce que**
les convertisseurs fonctionnent selon un montage en série et sont combinés, chaque convertisseur fournit au convertisseur suivant, un signal pour atteindre sa puissance maximale et reçoit de ce convertisseur un signal pour passer en marche à vide.

9. Procédé selon la revendication 7,
**caractérisé en ce que**
la régulation de tension ne se fait que dans l'un des convertisseurs et lorsqu'il atteint sa charge maximale, on passe successivement au convertisseur suivant.

10. Procédé selon l'une quelconque des revendications précédentes,
**caractérisé en ce que**
comme seuil de commutation pour transférer la régulation de tension ou couper, est la charge de base ou le point de rendement maximum.

11. Procédé selon l'une quelconque des revendications précédentes,
**caractérisé en ce que**
l'échange des données se fait par l'intermédiaire d'un bus série, notamment d'un bus CAN ou par des lignes particulières de transmission de signaux.
